# EUROPEAN PATENT APPLICATION

(11) **EP 2 658 339 A1**
(43) Date of publication of application: **30.10.2013**
(21) Application number: 11851457.9
(22) Date of filing: 20.12.2011
(51) Int. Cl.: H04W 88/14, H04L 12/56, H04L 12/66, H04W 92/06

(54) **GATEWAY DEVICE, COMMUNICATION SYSTEM, AND COMMUNICATION METHOD**

(30) Priority: 20.12.2010 JP 2010283401
(71) Applicant: NEC Corporation, Tokyo 108-8001 (JP)
(72) Inventor: TAMURA, Toshiyuki, Tokyo 108-8001 (JP)
(74) Representative: Betten & Resch
(86) International application number: PCT/JP2011/079511
(87) International publication number: WO 2012/086642

(57) **Abstract**

Provided are a gateway apparatus, communication system, and communication method that select a node apparatus connecting to an external network and that is capable of adding value or giving a different treatment to a terminal apparatus when the terminal apparatus connects to the external network. A gateway apparatus (103) monitors a communication signal transmitted from a terminal apparatus (101) via a base station (102), and according to specifying information in the communication signal, the gateway apparatus selects a predetermined node apparatus (104) from a plurality of node apparatuses (104, 109) connecting to external networks, and transmits the communication signal.

## Description

### TECHNICAL FIELD

### [Reference to Related Application]

The present invention is based upon and claims the benefit of the priority of Japanese patent application No. 2010-283401 filed on December 20th, 2010, the disclosure of which is incorporated herein in its entirety by reference thereto.
The present invention relates to a mobile communication network technology, and particularly to a communication system, apparatus, and method suitable for specialization or optimization of functions of a node apparatus connecting to an external network.

### BACKGROUND

In recent years, due to high functionalization and spread of mobile terminal apparatuses, such as high functional portable information terminals which have been released one after another, the mobile terminal apparatuses are employed for communication with an external IP (Internet Protocol) network for Web site browsing, content delivery, and the like. With the increase in data traffic in a mobile operator's network that provides a general packet radio service (General Packet Radio Service: GPRS), a load on a network node such as an SGSN (serving GPRS support node: serving node) or a GGSN (gateway GPRS support node: gateway node) has increased. The SGSN and the GGSN are components of a backbone network in a packet data network that supports radio access. Specifications of the general packet radio service GPRS for 2G (second generation), GSM (Global System for Mobile communication) and 3G (third generation) universal mobile telecommunication system (Universal Mobile Telecommunication System: UMTS) are described in Non Patent Literature 1, for example.

A technology for connecting a user traffic to an external network from a gateway located in a distance as shortest as possible from a mobile terminal apparatus or located in a shortest distance from the mobile terminal apparatus in terms of a network topology, without bringing the user traffic into the mobile operator's network, is incorporated, as "SIPTO with Traffic Offload Function (TOF)" in the 3GPP standardization organization, and is described in "Annex B (informative)" in Non Patent Literature 1. In this technology, an IP traffic selected on an Iu-PS interface in the universal mobile telecommunication system (UMTS) is offloaded using packet inspection.

### CITATION LIST

### [Non-Patent Literature]

Non-Patent Literature 1: 3GPP TS 23.060: http://www.3gpp.org/ftp/Specs/archive/23_series/23.060/23060-a10.zip

### SUMMARY

### TECHNICAL PROBLEM

An analysis on the related technology will be given below.

A backbone network of a packet data network supporting radio access is not configured to select a node apparatus connecting to an external network according to model information (or location) of a mobile terminal apparatus.

As a result, in a backbone network of a packet data network supporting radio access, when a mobile terminal apparatus is trying to connect to an external network , it was not necessary easy to provide a user with more attentive service. For instance, it is difficult to add a service on a per carrier basis, strengthen security for terminals for children or the elderly, or add value such as preferential connection to (or give different treatment to) particular models (models signed up for options).

Therefore, it is a main object of the present invention to provide a gateway apparatus, communication system, and communication method making it possible to select a node apparatus connecting to an external network and to add value or give a different treatment to a terminal apparatus, when the terminal apparatus connects to an external network.

### SOLUTION TO PROBLEM

According to an aspect of the present invention, there is provided a gateway apparatus, wherein the gateway apparatus monitors a communication signal transmitted from a terminal apparatus via a base station and
the gateway apparatus selects a predetermined preset node apparatus from a plurality of node apparatuses connecting to an external network, according to specifying information in the communication signal to transmit the communication signal.

According to another aspect of the present invention, there is provided a communication system comprising the gateway apparatus described above.

According to yet another aspect of the present invention, there is provided a communication method comprising monitoring a communication signal transmitted from a terminal apparatus via a base station, selecting a predetermined node apparatus from a plurality of node apparatuses connecting to an external network according to specifying information in the communication signal and transmitting the communication signal.

### ADVANTAGEOUS EFFECTS OF INVENTION

According to the present invention, it becomes possible to select a node apparatus connecting to an external network and add value or give a different treatment to a terminal apparatus when the terminal apparatus connects to the external network. Further, according to the present invention, it becomes possible to optimize a communication path by selecting a node apparatus connecting to an external network.

### BRIEF DESCRIPTION OF DRAWINGS

Fig. 1 is a diagram illustrating the configuration of a first exemplary embodiment of the present invention.
Fig. 2 is a diagram illustrating the configuration of a second exemplary embodiment of the present invention.
Fig. 3 is a diagram for explaining an operation example of the exemplary embodiment in Fig. 2.
Fig. 4 is a diagram illustrating the configuration of a GW apparatus in a first example of the present invention.
Fig. 5 is a diagram illustrating the configuration of a GW apparatus in a second example of the present invention.
Fig. 6 is a sequence diagram for explaining an operation of the first example of the present invention.
Fig. 7 is a sequence diagram for explaining an operation of the second example of the present invention.
Fig. 8 is a sequence diagram for explaining an operation of an example of the present invention.
Fig. 9 is a sequence diagram for explaining an operation of an example of the present invention.
Fig. 10 is a diagram for explaining a comparative example.
Fig. 11 is a diagram for explaining an application example of the first exemplary embodiment (modification) of the present invention.

### MODES

According to one of preferred modes of the present invention, a gateway apparatus (103) monitors a communication signal transmitted from a terminal apparatus (101) via a base station (102), selects a predetermined node apparatus (104) from a plurality of node apparatuses (gateway node apparatuses) connecting to an external network, according to specifying information included in the communication signal, to transmit the communication signal. According to one of preferred modes of the present invention, the specifying information includes model information of the terminal apparatus.

According to one of modes of the present invention, a gateway apparatus (401) may comprise a control plane (C-plane) control unit (403) that selects the node apparatus corresponding to model information of the terminal apparatus, by performing manipulation on an information element in the communication signal, in a case where the model information of the terminal apparatus in the communication signal corresponds to a predetermined model.

According to one of modes of the present invention, the gateway apparatus (303, 401) may comprise a user plane (U-plane) control unit (304) that functions as the node apparatus connecting to the external network (309).

According to one of modes of the present invention, a communication signal transmitted from the terminal apparatus (301) via the base station (302) may be transmitted from the user plane control unit (304) to the external network (309).

According to one of modes of the present invention, the control plane control unit may comprise a monitor unit (404) that performs an operation to rewrite APN (Access Point Name) information specifying a destination external network, in a case where the model information of the terminal apparatus included in the communication signal transmitted from the terminal apparatus via the base station is a predetermined terminal model.

According to one of modes of the present invention, the predetermined and specific (dedicated) node apparatus (104) may comprise filtering means that filters a communication signal from the external network.

According to another mode of the present invention, the specifying information in the communication signal is information specifying a connection destination (APN: Access Point Name), and by rewriting the information (APN) specifying the connection destination, a node apparatus close to the terminal apparatus in terms of location or in terms of network topology is selected.

According to one of modes of the present invention, a gateway apparatus (103) is provided between the base station (102) and a serving node apparatus (106),
the gateway apparatus (103) monitors a control signal transmitted from the base station to the serving node apparatus (106), and
in a case where terminal model information included in the control signal transmitted is a predetermined terminal model, transmits the control signal to the serving node apparatus (106), after manipulating information (APN) specifying a connection destination included in the control signal, thereby a dedicated gateway node apparatus (104) corresponding to the manipulated information element being selected as a node apparatus (gateway node apparatus) connecting to an external network.

According to one of modes of the present invention, the dedicated node apparatus (104) connecting to an external network is provided corresponding to the predetermined terminal model, and a mobile terminal apparatus (101) connects to the external network via the base station/radio network controller and the dedicated node apparatus (104), in a case where the mobile terminal apparatus is a predetermined terminal model.

According to one of modes of the present invention, a gateway apparatus (203) as a dedicated node apparatus may comprise a GGSN unit that functions as a node apparatus connecting to an external network. The GGSN unit in the gateway apparatus is selected as a node apparatus corresponding to the manipulated information element, and data transmitted from the terminal to the external network is outputted to the external network (210) via the base station/radio network controller and the GGSN unit in the gateway apparatus, in a case where the terminal model information is a predetermined terminal model.

According to one of modes of the present invention, the gateway apparatus performs an operation to rewrite APN (Access Point Name) information specifying a connection destination, in a case where the terminal model information included in the control signal transmitted from the terminal to the serving node apparatus via the base station is a predetermined terminal model.

According to one of modes of the present invention, upon receiving the control signal from the gateway apparatus, the serving node apparatus acquires an address corresponding to the APN by sending a query to a server apparatus that derives an address corresponding to the APN included in the control signal, and selects the dedicated gateway node apparatus corresponding to the address as a gateway node apparatus connecting to the external network.

According to one of modes of the present invention, a connection is made from the base station/radio network controller to an external network via the gateway node unit in the gateway apparatus, achieving a connection equivalent to a direct tunnel between the radio network controller and the gateway node unit.

According to one of modes of the present invention, one of the gateway apparatuses may be provided for a plurality of radio network controllers. Alternatively, a plurality of the gateway apparatuses may be provided corresponding to each of a plurality of radio network controllers.

According to one of modes of the present invention, it is possible to implement the following functions on a specific (dedicated) node apparatus (104).
- More detailed and attentive services (additional options on a per carrier basis) for a user;
- Enhanced security (for instance terminals for children and the elderly being allowed to connect to only sites whose security is confirmed); and
- Increased speed and prioritization, for instance providing particular models (option contract, etc; VIP treatment) with preferential services such as a preferential connection to an external network from a dedicated GGSN and high speed service using a content cache.
It becomes possible to connect the terminal apparatus (101) of a predetermined terminal model (model or equipment information, or version information) to an external network via a corresponding dedicated node apparatus (104), thus making it possible to optimize functions to be provided, performance, and services.

For instance, it is possible to connect a terminal apparatus (mobile information terminal) of a model that primarily provides an Internet connection function to an external network (the Internet), by selecting a node apparatus (GGSN) not equipped with costly apparatuses such as a filter apparatus that filters content and an accessory apparatus relating to lawful interception, optimizing the functions of the node apparatus (GGSN) for connecting to the external network.

According to another mode of the present invention, the gateway apparatus rewrites APN (Access Point Name) information and hence a gateway node apparatus (GGSN) close to the terminal apparatus in terms of location or in terms of network topology is selected as the node apparatus (GGSN) connecting to the external network. As a result, an optimization of a communication path can be performed. Further, a concentration of traffic on one node apparatus (GGSN) connecting to an external network can be avoided.

Exemplary embodiments will be described below with reference to the attached drawings. In the description below, a radio base station is assumed to include a base station (GSM base station BTS, UMTS base station NodeB) that performs radio-communicate with the mobile terminal apparatus 101 and a radio network controller (RNC) that controls the base stations (BTSs, NodeBs). The RNC connected to an SGSN over the Gb or Iu interface will be described as the radio base station (RNC). Further, the present invention can also be applied to a configuration in which a base station that radioly communicates with a mobile terminal apparatus and an RNC that controls the base station and connects it to an SGSN are provided separately.

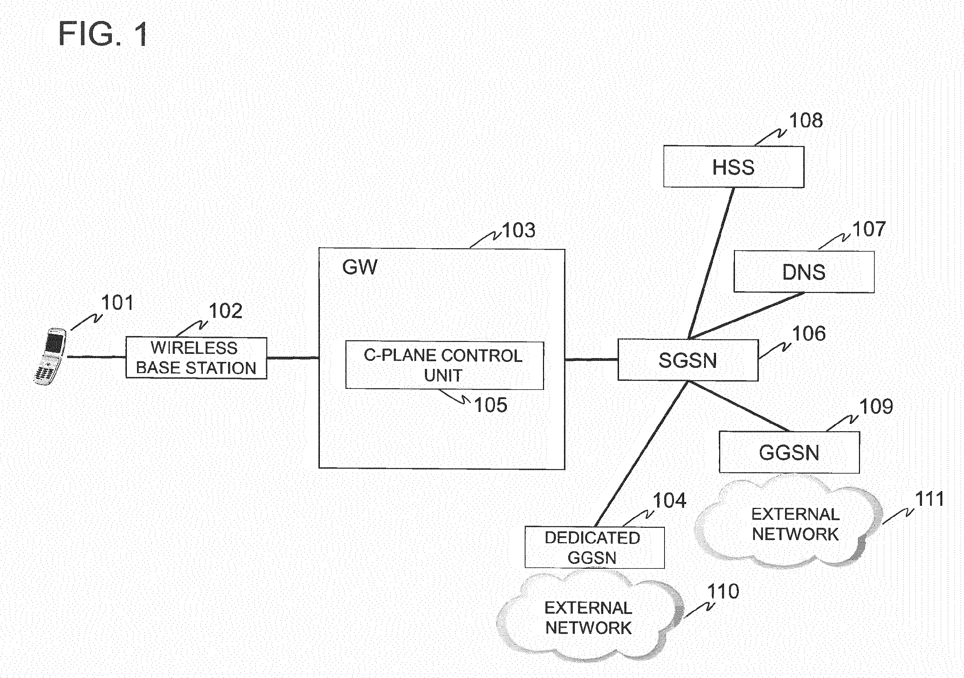

Fig. 1 is a diagram illustrating a system configuration of a first exemplary embodiment of the present invention. Referring to Fig. 1, there are provided a mobile terminal apparatus 101, a radio base station 102, a gateway apparatus (GW apparatus) 103, an SGSN apparatus 106, a DNS (Domain Name System) server 107 that converts an APN (Access Point Name), which is string information specifying an external network destination, into an IP address, an HSS (Home Subscriber Server) 108 that manages subscriber data, a GGSN apparatus 109, a dedicated GGSN apparatus 104, an external network 110 to which the dedicated GGSN apparatus 104 is connected, and an external network 111 to which the GGSN apparatus 109 is connected. The GW apparatus 103 comprises a C-plane control unit 105. The C-plane control unit 105 monitors a signal between an RNC and an SGSN. The external network 110 may be an operator service network such as IMS (IP Multimedia Subsystem), in which support is provided by the operator, and the external network (external packet data network) 111 may be a general Internet network (providing a connection to the Internet), though not limited thereto. Or the external networks 110 and 111 may be the same network. The HSS may be an HLR (Home Location Register).

A customary packet communication network does not have the GW apparatus 103 and the radio base station (RNC) 103 and the SGSN 106 are directly connected to each other. When the mobile terminal apparatus 101 performs packet communication, a bearer from the mobile terminal apparatus 101 to the external network 111 via the radio base station 102, the SGSN apparatus 106, and the GGSN 109 is generated and user data is transmitted and received over the bearer to perform communication.

In the present exemplary embodiment, in a case where the mobile terminal apparatus 101 performs packet communication, the dedicated GGSN apparatus 104 is selected according to equipment information of the mobile terminal apparatus 101 (for instance, the model name, model number (software version information), etc. recognized by IMEI-SV (International Mobile Equipment Identity-Software Version).

The C-plane control unit 105 of the GW apparatus 103 monitors a control signal transmitted from the radio base station (RNC) 102 to the SGSN apparatus 106, and acquires from the control signal equipment information (terminal model information) of the mobile terminal apparatus 101. When the terminal model information corresponds to a predetermined model (when it matches what is registered in a memory), the C-plane control unit 105 rewrites the APN of the destination, and transmits the control signal with the rewritten APN to the SGSN apparatus 106. The SGSN apparatus 106 sends a query about the rewritten APN to the DNS server 107, acquires an IP address, and sets up a GTP tunnel to a GGSN apparatus (the dedicated GGSN apparatus 104) corresponding to the rewritten APN. When the model information or the equipment information of the mobile terminal apparatus 101 corresponds to a predetermined particular model or equipment type (for instance, a terminal for children or VIP terminal), the dedicated GGSN apparatus 104 is selected. On the other hand., in a case where the model information or the equipment information of the mobile terminal apparatus 101 does not correspond to a predetermined particular model, the C-plane control unit 105 of the GW apparatus 103 does not rewrite the APN and connects to the external network 111 via the SGSN apparatus 106 and the GGSN apparatus 109. For instance, when the terminal is discriminated to be a smartphone (for instance, a mobile information terminal such as the iPhone (TM) made by Apple Inc., or the Galaxy S (TM) made by Samsung Electronics Co., Ltd.), the C-plane control unit 105 connects to the external network 111 via the SGSN apparatus 106 and the GGSN apparatus 109.

For the mobile terminal apparatus 101 whose terminal model information corresponds to a predetermined model or equipment type, a bearer from the mobile terminal apparatus 101 to the external network 110 via the radio base station 102, the SGSN apparatus 106, and the dedicated GGSN apparatus 104 is generated and user data is transmitted/received over the bearer to perform communication.

According to the present exemplary embodiment, an operator can obtain a variety of added benefits as shown below by selecting a corresponding GGSN according to a terminal model (terminal type).
- As to smartphones, a cost for GGSN can be reduced by not implementing DPI (Deep Packet Inspection) and various filters.
- Implement a model-specific content cache. High-speed operation can be achieved and traffic itself can be controlled by implementing a content cache of Apple Store, for example, in a GGSN dedicated to iPhones (trademarked by Apple, Inc.).
- By providing a GGSN dedicated to terminals for children, accessible websites can be efficiently restricted, such as resriction of kid's access to harmful websites.
- Implement a model-specific authentication interface. A model-specific authentication interface can be implemented in a model-specific GGSN.

As described, specific functions are implemented on the dedicated GGSN apparatus 104 in terms of option services, security, website restrictions (such as blocking access to harmful websites), increasing operating speed, and giving priority, and for instance a specialized and desired service function can be provided to a particular user. In other words, when the mobile terminal apparatus 101 connects to an external network, it is possible to add value and give a different treatment to the terminal apparatus.

### <Modification of Exemplary Embodiment 1>

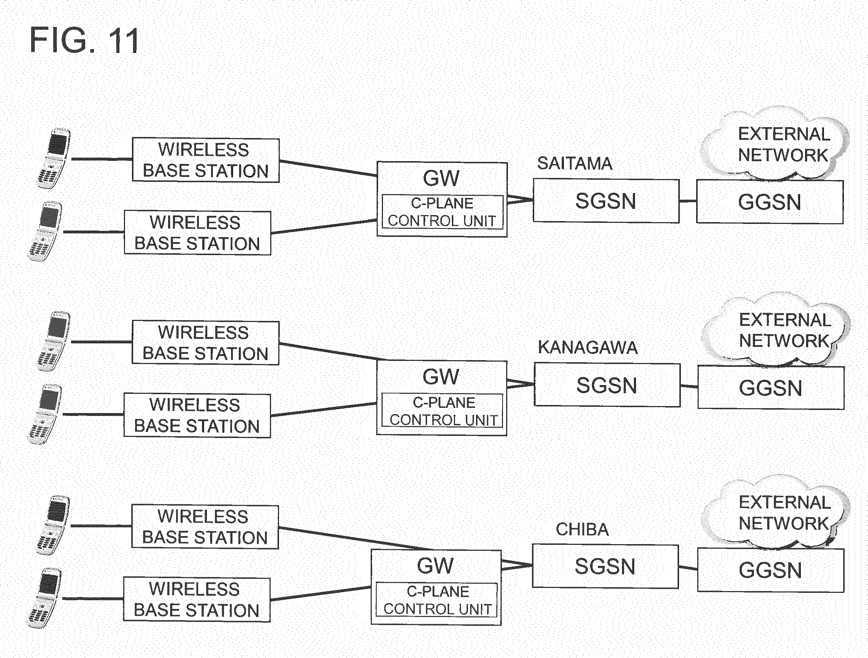

As a modification of the first exemplary embodiment, the C-plane control unit 105 of the GW apparatus 103 monitors the control signal transmitted from the radio base station (RNC) 102 to the SGSN apparatus 106, and checks if an APN (Access Point Name) specifying an external network destination (IP packet data network) is an APN to be rewritten, based on the information from the control signal. If the APN should be rewritten, the C-plane control unit 105 may transmit the control signal to the SGSN apparatus 106, after rewriting the APN. The SGSN apparatus 106 sends a query about the rewritten APN to the DNS server 107, acquires an IP address, and sets up a GTP tunnel to a GGSN apparatus (the dedicated GGSN apparatus 104) corresponding to the rewritten APN. For instance, this case is applied to an example in which the mobile terminal apparatus is connected to an external network by selecting a GGSN corresponding to a region (for instance, a prefecture), where the mobile terminal apparatus is located, as shown in Fig. 11 described later.

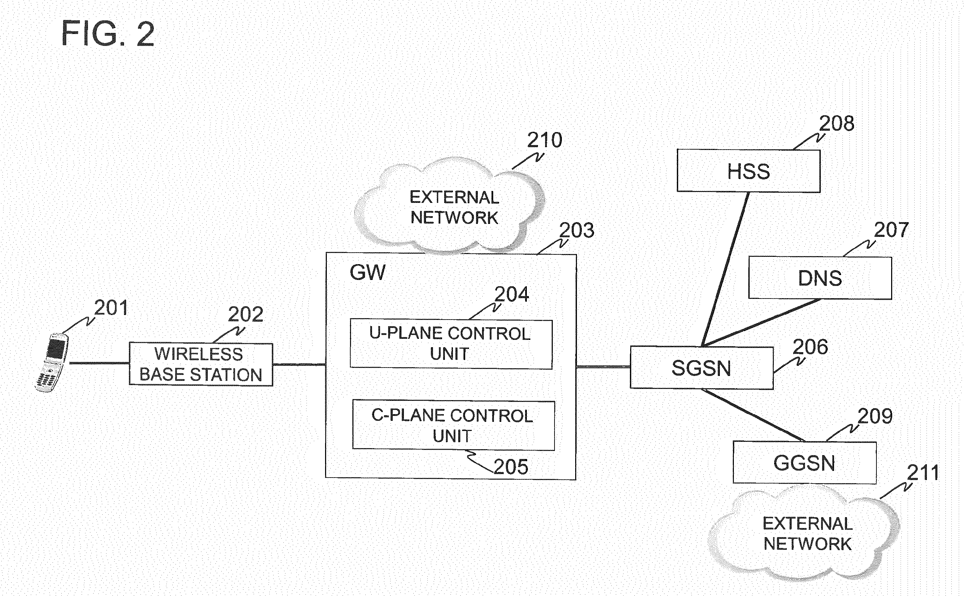

The following describes a second exemplary embodiment of the present invention.. Fig. 2 is a diagram illustrating a system configuration of the second exemplary embodiment of the present invention. In Fig. 2, there are provided a mobile terminal apparatus 201, a radio base station (RNC) 202, a gateway apparatus (GW) 203, an SGSN apparatus 206, a DNS server 207, an HSS 208 that manages subscriber data, a GGSN apparatus 209 connecting to an external network 211, an external network 210 to which the GW apparatus 203 is connected, and an external network 211 to which the GGSN apparatus 209 is connected. The DNS server 207 converts an APN into the IP address of a GGSN.

The GW apparatus 203 comprises a U-plane control unit 204 and a C-plane control unit 205. The U-plane control unit 204 performs control corresponding to a user plane function of a GGSN and realizes a layered protocol architecture providing user forward information. The C-plane control unit 205 supports and controls the user plane function. Further, the C-plane control unit 205 monitors a signal between the RNC and the SGSN.

A customary packet communication network does not have the GW apparatus 203 and the radio base station 202 and the SGSN 206 are directly connected to each other. In a case where the mobile terminal apparatus 201 performs packet communication, a bearer from the mobile terminal apparatus 201 to the external network 211 via the radio base station 202, the SGSN apparatus 206, and the GGSN 209 is generated and user data is transmitted/received over the bearer to perform communication. The SGSN 206 sends a query to the DNS 207, which in return sends the SGSN 206 the IP address of a GGSN corresponding to the APN, the SGSN 206 sets up a GTP tunnel to this GGSN, and the GGSN 209 connects to the external network 211.

In the present exemplary embodiment, the C-plane control unit 205 monitors the control signal transmitted from the radio base station (RNC) 202 to the SGSN apparatus 206, and when the terminal model information corresponds to what is predetermined (what has been stored in the C-plane control unit 205 in advance), the C-plane control unit 205 rewrites the APN of the destination and transmits the control signal with the rewritten APN to the SGSN 206. The SGSN 206 sends a query to the DNS 207. The DNS 207 in return sends to the SGSN 206 the IP address of a GGSN corresponding to the rewritten APN. In this case, the IP address of the GGSN is a GGSN unit of the GW apparatus 203; therefore a tunnel to the GGSN unit of the GW apparatus 203 is set up to connect to the external network 210 via the GGSN unit. In other words, when the mobile terminal apparatus 201 performs packet communication, depending on the terminal model information of the mobile terminal apparatus 201, a bearer to the external network 210 via the radio base station 202 and the GW apparatus 203 is generated, and the communication is performed by transmitting/receiving user data over the bearer. As a result, when the mobile terminal apparatus 201 is mainly for use of the Internet, it is able to perform packet communication with the external network 210 via the GGSN unit of the GW apparatus 203.

Further, in the present exemplary embodiment, effects equivalent to the Direct Tunnel technology can be obtained even in a packet communication network to which the technology is not applied. In other words, in customary GTP tunnel management, two tunnels, one (Iu) between a radio base station (RNC) and an SGSN and another (Gu) between the SGSN and a GGSN, are set up. According to the present exemplary embodiment, since the GW apparatus 203 and the external network 210 are connected and a direct connection is made from the radio base station (RNC) 202 to the external network 210 by the GW apparatus 203, an equivalent of a direct tunnel is set up from the RNC to the GGSN (the GGSN within the GW apparatus 203).

Note that a user plane apparatus of an SGSN is not necessary in a direct tunnel technology in the related technology, however, the tunnel between a radio base station (RNC) and a GGSN must be updated, every time a radio base station (RNC) changes due to movement of a terminal.

According to the present exemplary embodiment, even when an original radio base station (RNC) is replaced by another radio base station (RNC) due to movement of a terminal, it is not necessary to update a tunnel between a radio base station (RNC) and a GGSN. For instance, in a case where a GW apparatus 203 is provided for each radio base station (RNC), when a radio base station (RNC) is changed due to the movement of the terminal, forwarding is done by a GW apparatus 203 corresponding to a new radio base station (RNC) to an external network 210. Meanwhile, in a case where a single GW apparatus 203 is provided for a plurality of radio base stations (RNC), when an original radio base station (RNC) is replaced by an adjacent radio base station (RNC), a connection is directly made by the GW apparatus 203 to an external network 210 via a tunnel between an adjacent radio base station (RNC) and the GW apparatus 203.

### <EXAMPLES>

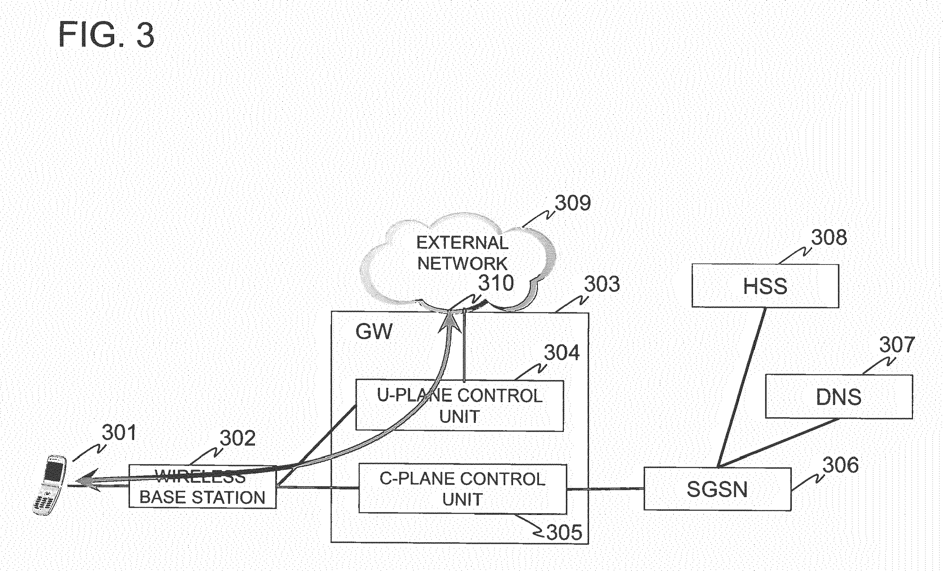

Fig. 3 is a diagram for explaining an example of Exemplary Embodiment 2 shown in Fig. 3. As shown in Fig. 3, the GW apparatus 303 connecting a mobile terminal apparatus 301 to an external network 309 comprises a U-plane control unit 304 and a C-plane control unit 305. 310 indicates a communication path from the mobile terminal apparatus 301 to the external network 309. A radio base station 302, a GW apparatus 303, an SGSN apparatus 306, a DNS server 307, and an HSS 308 are identical to 202, 203, 206, 207, and 208, respectively, in Fig. 2. As shown in Fig. 3, in a case where a model or equipment information of the mobile terminal apparatus 301 corresponds to a predetermined particular model or equipment type (for instance, a mobile information terminal such as a smartphone mainly for use of the Internet), the mobile terminal apparatus 301 is connected to the external network 309, via the radio base station 302 and the U-plane control unit 304 of the GW apparatus 303. Further, in a case where the mobile terminal apparatus 301 is a normal mobile terminal (mobile telephone), it is connected to the external network via the radio base station 302, the GW apparatus 303, the SGSN apparatus 306, and a GGSN not shown in the drawing. As in the exemplary embodiment 2, the U-plane control unit 304 in the GW apparatus 303 is selected by having the GW apparatus 303 rewrite an APN in a control signal which is transmitted from the radio base station 302 to the SGSN apparatus 306 and transmit the control signal with the rewritten APN to the SGSN apparatus 306. The DNS server 307 returns an IP address corresponding to the rewritten APN to the SGSN apparatus 306, as a response. The SGSN apparatus 306 selects a GGSN unit (the U-plane control unit) in the GW apparatus 303.

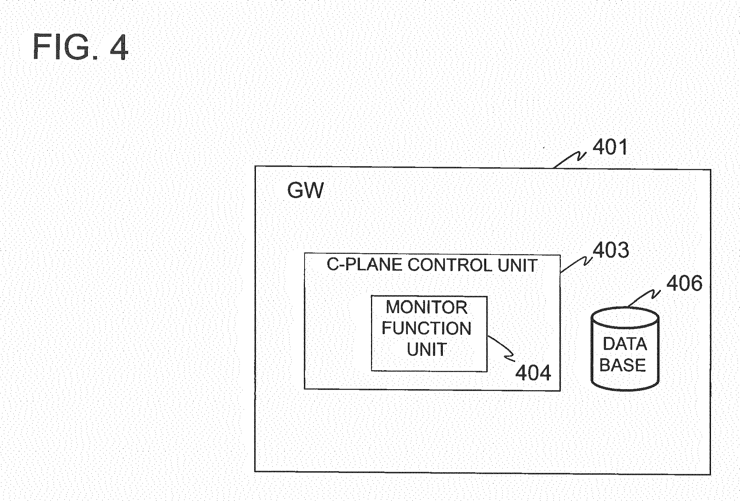

Fig. 4 is a diagram illustrating a configuration example of the GW apparatus 103 of Exemplary Embodiment 1 in Fig. 1 (401 in Fig. 4 corresponds to 103 in Fig. 1). Referring to Fig. 4, the GW apparatus 401 comprises a C-plane control unit 403 and a database 406. The C-plane control unit 403 comprises a monitor function unit 404.

The database 406 holds terminal model information (terminal type information) assigned to the dedicated GGSN (104 in Fig. 1) and APN of a destination as text (string) information. The monitor function unit 404 monitors a signal from an RNC to the SGSN, extracts terminal model information of the mobile terminal apparatus from, for instance, an activate PDP context request, searches the database 406, and checks if the terminal is a terminal whose connection is to be switched to the dedicated GGSN. When the connection of the terminal should be switched to the dedicated GGSN, the monitor function unit 404 rewrites the APN and transmits the control signal with the rewritten APN to the SGSN 106 (Fig. 1).

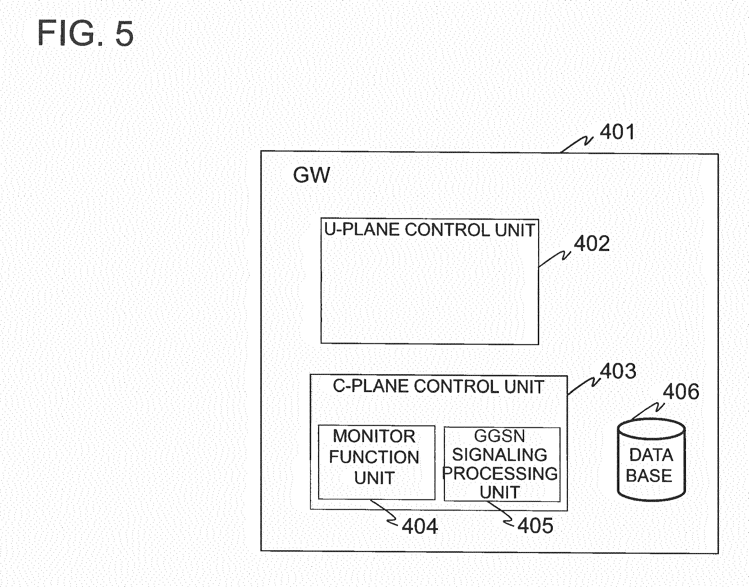

Fig. 5 is a diagram illustrating a configuration example of the GW apparatus 203 of Exemplary Embodiment 2 in Fig. 2 (401 corresponds to 203 in Fig. 2 and 303 in Fig. 3). Referring to Fig. 5, the GW apparatus 401 comprises a U-plane control unit 402, a C-plane control unit 403, and a database 406. The C-plane control unit 403 comprises a monitor function unit 404 and a GGSN signaling processing unit 405.

The database 406 holds terminal model information (terminal type information) assigned to the dedicated GGSN (104 in Fig. 1) and APN of a destination as for instance text information. The monitor function unit 404 monitors a signal from the RNC to the SGSN, extracts terminal model information from a PDP context activation request, and searches the database 406 to check whether or not the APN of the control signal should be rewritten. When the APN should be rewritten, the monitor function unit 404 rewrites the APN and transmits the control signal with the rewritten APN to the SGSN 306.

The GGSN signaling processing unit 405 performs signaling processing between the GGSN and SGSN and between the GGSN and the HSS, and a function equivalent to that of a GGSN is obtained by combining this GGSN signaling processing 405 and the U-plane control unit 402 realizing a GGSN user plane function.

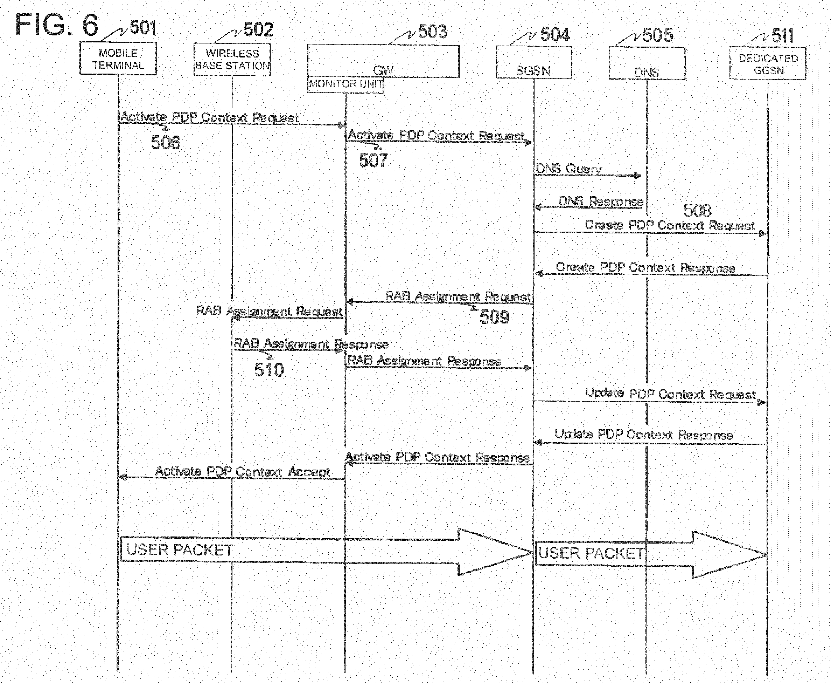

Fig. 6 illustrates an operation in which the GW apparatus 103 (401 in Fig. 4) of Exemplary Embodiment 1 changes an APN in order to connect to the dedicated GGSN.

A mobile terminal apparatus 501 transmits a request (communication start signal) to activate a PDP context in an SGSN and a GGSN (a signal 506: Activate PDP Context Request). This Activate PDP Context Request includes information such as an APN (Access Point Name) and a QoS (Quality of Service). The APN is a text string indicating an external network (packet data network) to which the mobile terminal apparatus 501 is going to connect.

A radio base station (RNC) 502 forwards the signal 506 from the mobile terminal 501 to the SGSN 504, and the monitor function unit 404 of a GW apparatus 503 monitors all signals transmitted from the radio base station (RNC) 502 to the SGSN 504.

The GW apparatus 503 (the monitor function unit 404 in Fig. 4) detects the signal 506 from monitored signals, and rewrites the APN when the terminal information included in the signal 506 indicates that the APN should be rewritten. The database 406 (refer to Fig. 4) of the GW apparatus 503 holds information as to which terminal models and APNs should be rewritten. In other words, the monitor function unit 404 searches the database 406 to see if the terminal model set in the signal 506 matches the information held in the database 406, rewrites the corresponding APN information if it does, and the GW apparatus 503 transmits a signal 507 with the rewritten APN to the SGSN 504. For instance, when the APN specified by the Activate PDP Context Request is "Internet" and the database 406 holds "Internet" as an APN that should be rewritten, the monitor function unit 404 rewrites the APN "Internet" to an APN of a dedicated GGSN. Further, the database 406 may hold terminal models, for which APNs should be rewriting and rewritten APNs in association with the terminal models.

The SGSN 504 searches for an IP address of the GGSN by sending a DNS query to a DNS 505 with the APN included in the signal 507 as a key. In this case, the DNS 505 searches for an IP address of the GGSN using the rewritten APN, due to the fact that the GW apparatus 503 (the monitor function unit 404) has rewritten the APN, and the IP address of the dedicated GGSN 511 is derived as a result. The DNS 505 notifies the IP address to the SGSN as a response (DNS Response).

The SGSN 504 exchanges signals with the dedicated GGSN 511 in the same way as it usually does with a GGSN. In other words, the SGSN 504 transmits a signal 508 (Create PDP Context Request) to a GGSN unit of the GW apparatus 503, in order to set up a tunnel between the SGSN and the GGSN. This signal 508 includes an identifier TEID (Tunnel Endpoint Identifier) of the GTP tunnel endpoint and information required for a charging process (Charging Characteristics).

The dedicated GGSN 511 sets up the tunnel, assigns the IP address, and responds to the SGSN 504 (Create PDP Context Response). This response (Create PDP Context Response) includes the IP address of the mobile terminal 501. In other words, the dedicated GGSN 511 notifies the IP address routed from the external network to the GGSN unit as a user IP address for the mobile terminal 501.

The SGSN 504 receives a response from the dedicated GGSN 511 and transmits a radio access bearer assignment request signal 509 (RAB Assignment Request) to the radio base station (RNC) 502. The signal 509 (RAB Assignment Request) specifies a radio access bearer identifier (RAB ID), QoS characteristics, and the GTP tunnel on the SGSN's side.

The radio base station (RNC) 502 sets up a radio communication path (RAB Setup) to the terminal, and transmits a response signal 510 (RAB Assignment Response) to the SGSN 504 as a response to the radio access bearer assignment request signal 509.

Upon receiving a radio access bearer assignment response (RAB Assignment Response) from the radio base station (RNC) 502 via the GW apparatus 503, the SGSN 504 transmits an Update PDP Context Request to the GGSN. The Update PDP Context Request is transmitted from the SGSN to the GGSN so as to change a path or the QoS.

The GGSN transmits an Update PDP Context Response to the SGSN 504. Upon receiving it, the SGSN 504 transmits an Activate PDP Context Response (Accept) to the radio base station (RNC) 502.

As described above, the transmission of a user packet from the dedicated GGSN 511 to an external network is achieved by having the GW apparatus 503 change an APN.

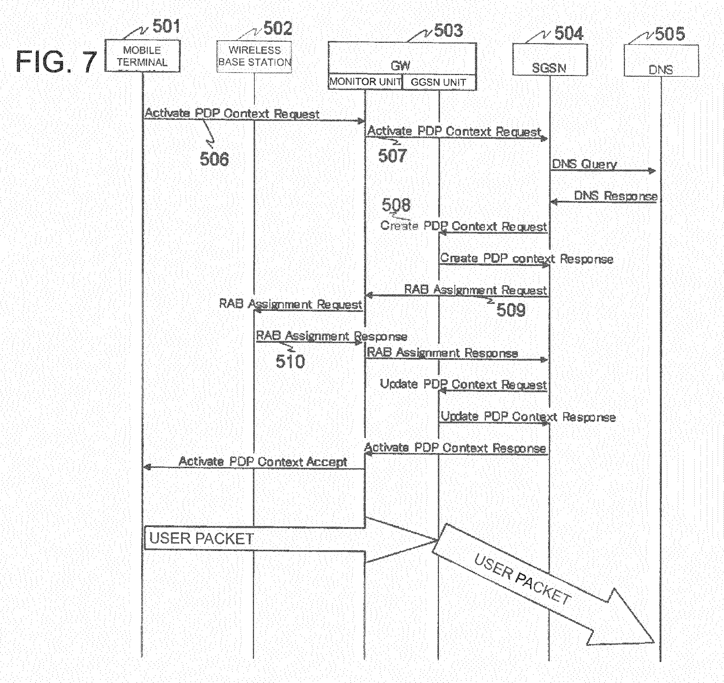

Fig. 7 illustrates an operation in which the GW apparatus 203 (401 in Fig. 5) of Exemplary Embodiment 2 changes an APN in order to connect to a GGSN unit.

The mobile terminal 501 (user equipment: UE) transmits the request (the communication start signal) 506 to activate a PDP context in the SGSN and the GGSN (Activate PDP Context Request). This Activate PDP Context Request includes information such as an APN (Access Point Name) and a QoS (Quality of Service). The APN is a text string indicating an external network (packet data network) to which the mobile terminal 501 is connecting.

The radio base station (RNC) 502 forwards the signal 506 from the mobile terminal 501 to the SGSN 504, and the monitor function unit (404 in Fig. 5) of the GW apparatus 503 monitors all signals which are transmitted from the radio base station (RNC) 502 to the SGSN 504.

The monitor unit (the monitor function unit 404 in Fig. 5) of the GW apparatus 503 detects the signal 506 from monitored signal, and rewrites the APN, when the terminal model information included in the signal 506 corresponds to a predetermined terminal model and indicates that an APN included in the signal is to be rewritten. The database (406 in Fig. 5) of the GW apparatus 503 holds information regarding a terminal model which is a target of rewriting an APN and an APN after rewritten. In other words, the monitor unit (404 in Fig. 5) of the GW apparatus retrieves the database 406 to see if an APN set in the signal 506 matches an APN held in the database 406, and if match is found, rewrites the APN in the signal 506 with the corresponding information. The GW apparatus 503 transmits the signal 507 which has the APN rewritten to the SGSN 504. For instance, when the terminal model information specified by the Activate PDP Context Request corresponds to a registered model, the APN is "Internet," and the database 406 holds "Internet" as an APN that should be rewritten, the monitor function unit 404 rewrites the APN "Internet," to, for instance, an APN "Kawasaki. Internet" of an external network, to which the GGSN unit within the same GW apparatus 503 connects. Further, the database (406 in Fig. 5) of the GW apparatus 503 may hold the terminal model information, APN, and APN after rewritten, in association with each other.

When the monitor unit (the monitor function unit 404 in Fig. 5) of the GW apparatus 503 rewrites an APN, the connection destination is not limited to the GGSN unit of the GW apparatus 503, and for instance, the monitor unit may rewrite the APN to an APN of an external network (for instance, "Yokohama. Internet") to which a GGSN unit in a GW apparatus different from the GW apparatus 503 connects.

The SGSN 504 sends a DNS query to the DNS 505 with the APN included in the signal 507 as a key to cause DNS 505 to search for an IP address of the GGSN. In this case, the DNS 505 searches for an IP address of a GGSN using the rewritten APN, due to the fact that the GW apparatus 503 (the monitor function unit 404) has rewritten the APN. As a result, an IP address of the GGSN unit in the GW apparatus 503 is derived, and the IP address is notified to the SGSN as a response (DNS Response). The DNS 505 performs query processing with the APN "Kawasaki. Internet," and an IP address corresponding to the name "Kawasaki. Internet," i.e., the IP address of the GW apparatus 503, is returned to the SGSN 504. Note that the IP address corresponding to the name "Kawasaki. Internet" is assumed to be registered in the DNS 505.

The SGSN 504 exchanges signals with the GGSN unit of the GW apparatus 503, in the same way as an SGSN customarily does with a GGSN. In other words, the SGSN 504 transmits the signal 508 (Create PDP Context Request) to the GGSN unit of the GW apparatus 503, in order to set up a tunnel between an SGSN and a GGSN. This signal 508 includes an identifier TEID (Tunnel Endpoint Identifier) of a GTP tunnel endpoint and information required for a charging process (Charging Characteristics).

Upon receiving the signal 508, the GW apparatus 503 processes the signal 508, as a customary GGSN would (tunnel setup and IP address assignment) and responds to the SGSN 504 (Create PDP Context Response). This response (Create PDP Context Response) includes an IP address of the terminal 501. In other words, the GGSN unit of the GW apparatus 503 notifies an IP address routed from the external network to the GGSN unit, as a user IP address for the mobile terminal 501.

The SGSN 504 receives a response from the GGSN unit of the GW apparatus 503 and transmits a radio access bearer assignment request signal 509 (RAB Assignment Request) to the radio base station (RNC) 502. The signal 509 (RAB Assignment Request) specifies a radio access bearer identifier (RAB ID), QoS characteristics, and a GTP tunnel on the SGSN's side.

The radio base station (RNC) 502 sets up a radio communication path (RAB Setup) between a terminal and the radio base station (RNC) 502, and transmits a response signal 510 (RAB Assignment Response) to the SGSN 504, as a response to the radio access bearer assignment request signal 509.

The monitor function unit (404 in Fig. 4) of the GW apparatus 503 detects the signal 509, and the GW apparatus 503 holds the tunnel information (RAB ID) between the radio base station 502 and the SGSN 504, TEID (Tunnel Endpoint Identifier), and the IP address.

Upon receiving the radio access bearer assignment response (RAB Assignment Response) from the radio base station (RNC) 502 via the GW apparatus 503, the SGSN 504 transmits an Update PDP Context Request to the GGSN unit of the GW apparatus 503. It is noted that an Update PDP Context Request is transmitted from an SGSN to a GGSN so as to perform path change or QoS change. Further, the PDP context includes information regarding a logical path between the mobile terminal (UE) 501 and the network.

The GGSN unit of the GW apparatus 503 transmits a response to an Update PDP Context request (Update PDP Context Response) to the SGSN 504.

Upon receiving the response, the SGSN 504 transmits a response of an Activate PDP Context Request (Activate PDP Context Response (Accept)) to the radio base station (RNC) 502.

The U-plane control unit 402 (refer to Fig. 4) of the GW apparatus 503 detects a GTP packet (user packet) transmitted from the mobile terminal 501 to the SGSN 504 via the radio base station (RNC) 502, using the held tunnel information as key information, and transmits the packet directly to the external network. In other words, the IP traffic is offloaded. Further, the GW apparatus 503 converts a user packet received from an external network into a GTP tunnel packet, and transmits the converted packet to the radio base station (RNC) 502.

As described above, the transmission of a user packet from the GW apparatus 503 to the external network is achieved by having the monitor unit of the GW apparatus 503 change an APN.

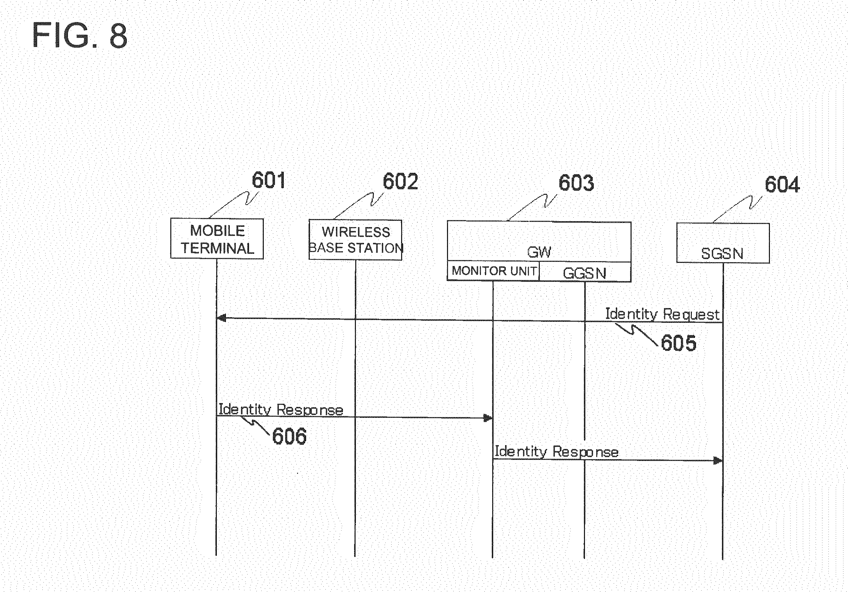

Fig. 8 illustrates an operation in which a GW detects a model of a mobile terminal. An SGSN 604 transmits a signal 605 (Identity Request) to a mobile terminal 601 in order to confirm an ID (identification number) thereof.

The mobile terminal 601 responds to the signal 605 (Identity Request) with an ID (IMEI-SV) regarding the mobile equipment information, using a signal 606 (Identity Response). At this time, the GW apparatus 603 monitors the signal 606 and stores the mobile terminal equipment information associated with an ID (P-TMSI (Packet-Temporary-Mobile-Subscriber-Identity), etc.) used by the mobile terminal and the SGSN as session information. Making the association is made possible, because this ID used by the mobile terminal and the SGSN is also given to the communication start signal 506 (Figs. 6 and 7).

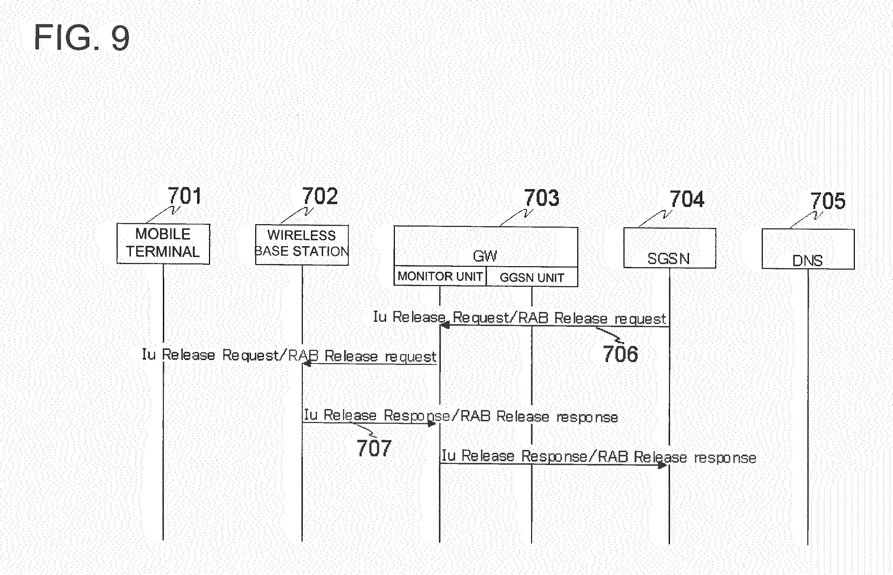

Fig. 9 illustrates an operation in which a GW apparatus deletes tunnel information between a radio base station 702 and an SGSN 704. When deleting a radio communication path, the GW apparatus transmits a signal 706 (Iu Release Request or RAB Release Request) to the SGSN 704 and the radio base station 702, and exchanges a signal 707 (Iu Release Response or RAB Release Response).

The GW apparatus 703 monitors the signals 706 and 707, detects tunnel information (RAB ID) to be deleted, and deletes tunnel information held in the U-plane processing unit (104 in Fig. 1). As a result, the U-plane processing unit (104 in Fig. 1) of the GW apparatus 703 no longer transmits the GTP packet (user packet), transmitted from the radio base station (RNC) to the SGSN, directly to the external network.

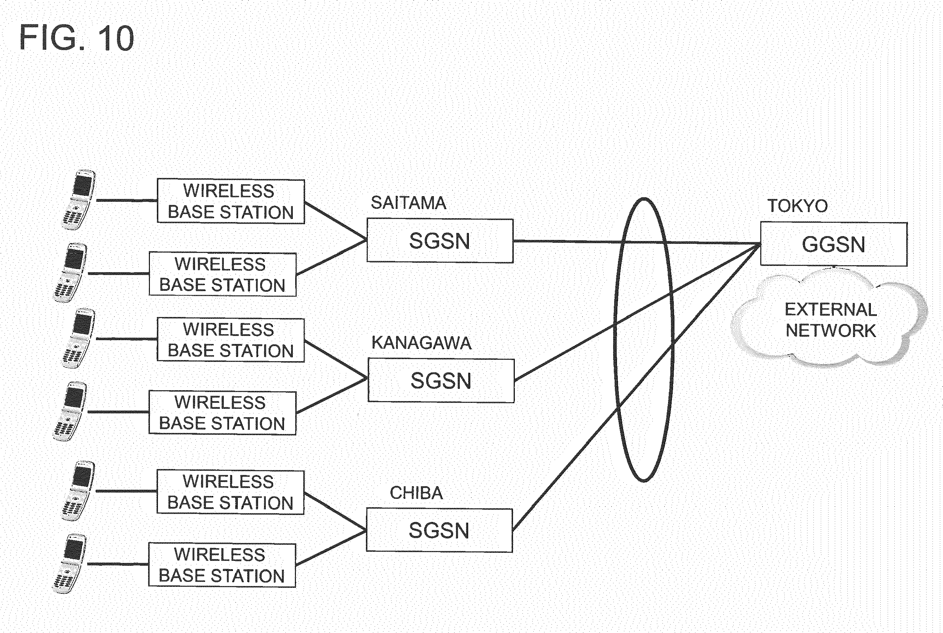

Fig. 10 is a diagram for explaining a comparative example. In the example shown in Fig. 10, since the GW apparatus relating to the present invention is not provided, when a plurality of GSNs (for instance, SGSNs installed in Saitama, Kanagawa, and Chiba) send the same APN specifying a destination external network (IP packet data network (PND)) (for instance, APN = "Internet"), all the traffic is concentrated on a single GGSN (for instance, installed in Tokyo) that connects to this external network, increasing transmission costs.

Fig. 11 is a diagram for explaining a modification of Exemplary Embodiment 1 described above. As shown in Fig. 11, according to Exemplary Embodiment 2, a C-plane control unit of a GW apparatus in which, for instance, Saitama, rewrites an APN "internet" of control information (Activate PDP Context Request) to "Saitama. internet" and transmits the signal with the rewritten APN to an SGSN, and the SGSN acquires an IP address corresponding to "Saitama. internet" from a DNS and connects to an external network via a corresponding GGSN. In Kanagawa, the C-plane control unit of a GW apparatus rewrites the APN "internet" to "Kanagawa. internet" and transmits the rewritten APN to an SGSN, and the SGSN acquires an IP address corresponding to "Kanagawa. internet" from a DNS and connects to an external network via a corresponding GGSN. Similarly, the C-plane control unit of a GW apparatus in Chiba rewrites the APN "internet" to "Chiba. internet" and transmits the rewritten APN to an SGSN, and the SGSN acquires an IP address corresponding to "Chiba. internet" from a DNS and connects to an external network via a corresponding GGSN. As described, the present exemplary embodiment can make a connection on an area-by-area basis (such as in each prefecture) and avoid concentration of traffic, contributing to the reduction of transmission costs.

In the present exemplary embodiment, the following effects can be obtained.

By having a GW apparatus select a dedicated GGSN according to the type (the model name and model number recognized by IMEI-SV) of a mobile terminal apparatus, it becomes possible to give a particular function specifically required by the GGSN according to the type of the mobile terminal apparatus. As a result, according to the terminal type such as the model and equipment, it becomes possible to customize functions implemented on a node apparatus (GGSN) connecting to an external network to provide specialized services such as optional services, enhanced security, access restriction to harmful websites according to the type of the terminal, content filtering, speed increase using a content cache, and priority service, and the provided functions, performance, and services can be optimized.

In a configuration in which the GW apparatus comprises a built-in gateway function, the mobile terminal is able to maintain communication even when it is handed over to another radio base station or another SGSN due to the movement thereof.

Further, optimization of the communication path can performed by selecting a gateway node apparatus (GGSN) close to a terminal apparatus in terms of location or in terms of network topology, as a node apparatus (GGSN) for connecting to am external network.

Further, the disclosure of Non Patent Literature listed above is incorporated herein in its entirety by reference thereto. It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

### REFERENCE SIGNS LIST

101, 201, 301, 501, 601, 701: mobile terminal apparatus
102, 202, 302, 502, 602, 702: radio base station (RNC)
103, 203, 303, 401, 503, 603, 703: GW apparatus
104, 511: dedicated GGSN apparatus
105, 205, 305, 403: C-plane control unit
106, 206, 306, 504, 604, 704: SGSN apparatus
107, 207, 307, 505, 705: DNS
108, 208, 308: HSS
109, 209: GGSN apparatus
1 1 0, 1 1 1 , 210, 21 1 , 309: external network
204, 304, 402: U-plane control unit
205: C-plane control unit
310: communication path
404: monitor function unit
405: GGSN signaling processing unit
406: database

## Claims

1. A gateway apparatus wherein the gateway apparatus monitors a communication signal transmitted from a terminal apparatus via a base station, and
the gateway apparatus selects a predetermined preset node apparatus from a plurality of node apparatuses connecting to an external network, according to specifying information in the communication signal to transmit the communication signal.

2. The gateway apparatus according to claim 1, wherein the specifying information includes model information or equipment information of the terminal apparatus.

3. The gateway apparatus according to claim 2, comprising:
a control plane (C-plane) control unit that performs manipulation on an information element in the communication signal to select the node apparatus corresponding to the model or equipment of the terminal apparatus, in a case where the model information of the terminal apparatus in the communication signal corresponds to a predetermined model or equipment type.

4. The gateway apparatus according to claim 1 or 2, comprising:
monitoring means that monitors the communication signal; and
forwarding means that selects the predetermined node apparatus and forwards the communication signal to the preset node apparatus.

5. The gateway apparatus according to claim 4, comprising
a control plane (C-plane) control unit that comprises the monitoring means.

6. The gateway apparatus according to claim 5, comprising
a user plane (U-plane) control unit that comprises the forwarding means.

7. The gateway apparatus according to any one of claims 1 to 6, wherein the gateway apparatus is connected to the external network.

8. The gateway apparatus according to claim 7, wherein the gateway apparatus forwards a communication signal transmitted from the terminal apparatus via the base station to the external network without selecting any of the plurality of node apparatuses, according
to the specifying information.

9. The gateway apparatus according to claim 3, wherein the control plane (C-plane) control unit comprises
a monitor unit that performs a manipulation to rewrite information specifying a destination external network, in a case where the model information or equipment information of the terminal apparatus included in the communication signal transmitted from the terminal apparatus via the base station corresponds to a predetermined model or equipment type.

10. The gateway apparatus according to any one of claims 1 to 6 and 9, wherein the predetermined node apparatus comprises
filtering means that performs filtering on a communication signal from the external network.

11. The gateway apparatus according to any one of claims 1 to 6, 9, and 10, wherein the plurality of node apparatuses connecting to the external network are gateway node apparatuses.

12. The gateway apparatus according to any one of claims 1 to 11, wherein the terminal apparatus is a radio terminal apparatus, and the base station is a radio base station, the terminal apparatus and the base station performing radio communication with each other.

13. The gateway apparatus according to claim 1, wherein the specifying information includes information specifying a connection destination of the terminal apparatus.

14. The gateway apparatus according to claim 13, comprising
a control plane (C-plane) control unit that rewrites information specifying a connection destination of the terminal apparatus to select a node apparatus close to the terminal apparatus in terms of location or in terms of network topology, as a node apparatus connecting to the external network.

15. A communication system comprising:
a terminal apparatus according to claim 1,
a base station,
a plurality of node apparatuses, and
a gateway apparatus according to any one of claims 1 to 14.

16. A communication method comprising:
monitoring a communication signal transmitted from a terminal apparatus via a base station; and
selecting a predetermined node apparatus from a plurality of node apparatuses connecting to an external network according to specifying information in the communication signal to transmit the communication signal.

17. The communication method according to claim 16, wherein the specifying information includes model information or equipment information of the terminal apparatus.

18. The communication method according to claim 17, comprising:
selecting the node apparatus corresponding to the model or equipment of the terminal apparatus, in a case where the model information of the terminal apparatus in the communication signal corresponds to a predetermined model or equipment type.

19. The communication method according to claim 18, comprising:
performing a manipulation to rewrite information specifying a destination external network, in a case where the model information of the terminal apparatus included in the communication signal transmitted from the terminal apparatus via the base station corresponds to a predetermined model or equipment type.

20. The communication method according to any one of claims 16 to 19, comprising
the predetermined node apparatus filtering a communication signal from the external network.

21. The communication method according to claim 16, wherein the specifying information includes information specifying a connection destination of the terminal apparatus.

22. The communication method according to claim 21, comprising:
rewriting information specifying a connection destination of the terminal apparatus to select a node apparatus close to the terminal apparatus in terms of location or in terms of network topology as a node apparatus connecting to the external network.

23. A terminal apparatus making a communication connection to an external network from a mobile network via a base station, wherein the terminal apparatus transmits a communication signal including predetermined specifying information to the mobile network via the base station, and
transmits the communication signal to the external network via a predetermined node apparatus selected from a plurality of node apparatuses connecting to the external network, according to the specifying information by a gateway apparatus that is provided on the mobile network and that monitors the communication signal.

24. The terminal apparatus according to claim 23, wherein the specifying information includes model information or equipment information of the terminal apparatus.
